(19) Europäisches Patentamt
European Patent Office
Office européen des brevets

(11) **EP 3 771 822 A1**

(12) **EUROPEAN PATENT APPLICATION**

(43) Date of publication:
**03.02.2021 Bulletin 2021/05**

(51) Int Cl.:
***F03D 17/00*** *(2016.01)*

(21) Application number: **19189607.5**

(22) Date of filing: **01.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Siemens Gamesa Renewable Energy A/S**
**7330 Brande (DK)**

(72) Inventor: **The designation of the inventor has not yet been filed**

(74) Representative: **Aspacher, Karl-Georg**
**Siemens Gamesa Renewable Energy GmbH & Co. KG**
**Otto-Hahn-Ring 6**
**81739 München (DE)**

(54) **A METHOD FOR COMPUTER-IMPLEMENTED DETERMINATION OF A VERTICAL SPEED WIND PROFILE OF A WIND FIELD**

(57) A method for computer-implemented determination of a wind speed profile information (WSPI) characterizing a vertical wind profile of a wind field (WF) approaching a wind turbine (1) is described. At each time point of one or more time points during the operation of the wind farm the following steps are performed: obtaining a number of measurement values (MV) of the wind turbine (1), the number of measurement values (MV) being captured by respective sensors of the wind turbine (1) to monitor and/or control the wind turbine (1); determining a wind speed profile information (WSPI) by processing the number of measurement values (MV) by a trained data driven model (MO), where the number of measurement values (MV) is fed as a digital input to the trained data driven model (MO) and the trained data driven model (MO) provides the wind speed profile information (WSPI) as a digital output, where the wind speed profile information (WSPI) at least comprises as a target value a shear coefficient of the wind field (WF) in direction to the wind turbine (1).

FIG 1

EP 3 771 822 A1

**Description**

The present invention relates to a method and an apparatus for computer-implemented determination of a wind speed profile information characterizing a vertical wind profile of a wind field approaching a wind turbine.

A wind turbine comprises an upper section with a rotor and a nacelle on the top of a tower, where the upper section can be rotated around a vertical yaw axis in order to vary the yaw angle of the wind turbine. The yaw angle of the wind turbine is usually adjusted such that the rotor of the wind turbine faces the wind. To do so, a wind sensor (i.e. anemometer) is installed on the wind turbine to estimate the wind direction.

A vertical wind shear profile of a wind field approaching the turbine influences the loads on the rotor blades. Typically, the wind turbine can measure the wind speed at one point, namely at hub height. From only one measurement of the wind speed one is not able to determine a vertical wind speed profile for further investigation about the loads on the rotor blades. For a better knowledge about the vertical wind speed profile, in a typical measurement campaign, two point measurements of the wind speed are carried out, one at hub height and another at the lower blade tip. However, these two wind speeds do not reflect the complex reality the turbine operates under. Furthermore, it is not possible to evaluate the vertical wind field profile from only two wind speeds of the swept rotor area. This results in under-complex control-strategies that cannot incorporate the complex behavior of the wind field.

It is an object of the present invention to provide an easy method and apparatus in order to be able to determine a vertical wind field profile approaching a wind turbine.

These objects are solved by the independent claims. Preferred embodiments of the invention are defined in the dependent claims.

According to a first aspect, a method for computer-implemented determination of a wind speed profile information characterizing a vertical wind profile of a wind field approaching a wind turbine is suggested. The method is applied to a single turbine and may also be applied to a plurality of wind turbines of a wind farm. The turbine comprises an upper section on top of a tower, the upper section being pivotable around a vertical yaw axis and having a nacelle and a rotor with rotor blades. The rotor is attached to the nacelle and the rotor blades are rotatable by wind around the horizontal rotor axis.

According to the method of the invention, the following steps are performed at each time point of one or more time points during the operation of the wind farm.

In a first step, a number of measurement values of the wind turbine is obtained. The number of measurement values is captured by respective sensors of the wind turbine to monitor and/or control the wind turbine. The measurement values will be used, for example, to adjust the yaw angle to face a wind direction perpendicular. Furthermore, the number of measurement values may be used to monitor, for example, that the wind turbine will not exceed predetermined loads on the rotor and its blades.

In a second step, a wind speed profile information is determined by processing the number of measurement values by a trained data driven model. The number of measurement values is fed as digital input to the trained data driven model and the trained data driven model provides the wind speed profile information as a digital output. The wind speed profile information at least comprises, as a target value, a shear coefficient of the wind field in direction to the wind turbine.

The method of the invention provides an easy and straight forward method for determining a wind shear coefficient of the wind field approaching the wind turbine. To do so, a trained data driven model is used. This model is trained by training data comprising a plurality of simulation data representing measurement values of the wind turbine together with the information about the shear coefficient determined from the simulation representing the target value.

Any known data driven model being learned by machine learning may be used in the method according to the invention. In a particularly preferred embodiment, the trained data driven model is a neural network, preferably a Deep Neural Network. Nevertheless, other trained data driven models may also be implemented in the method of the invention, e.g. models based on decision trees or Support Vector Machines.

Knowing the shear coefficient of the wind field approaching the wind turbine allows to determine the vertical wind profile of the wind field as the vertical wind profile can be described by a formula characterizing a curve shape. Hence, knowing the shear coefficient allows, in conjunction with the well-known formula, to determine the vertical wind profile approaching the wind turbine. This information can be used for improved control strategies for and/or monitoring of the wind turbine.

The trained data driven model may be a neural network being trained by minimizing a cost function thereby adapting weights of all hidden layer nodes accordingly. In such a neural network, the measurement values will be used as input channels. The neural network may have one or more hidden layers. These hidden layers may be fully connected. In another embodiment, the hidden layers may be partially connected with each other. Fully connected means that all nodes from the input layer are connected to each node of the first hidden layer. The same holds for the first hidden layer to a second hidden layer, if applicable. Finally, the output layer provides the target value in form of the wind speed profile information, at least comprising the shear coefficient of the wind field approaching the wind turbine.

According to a further preferred embodiment, the wind speed profile information may be output via an interface for determination of a control information for controlling and/or monitoring the wind turbine. The determination of a control information for controlling the wind turbine may be made via a processing unit. The processing unit may be the same processing unit which is conducting the suggested method or may be a different processing unit. The control information may be, for example, a control command to adapt the yaw angle or a pitch angle of the rotor blades as load on the rotor and the rotor blades, respectively, may exceed a predetermined threshold.

According to another preferred embodiment, the wind speed profile information further comprises as target values, at least one of: a wind speed parameter representing wind speed in the height of a nacelle (hop height) of the wind turbine; a yaw error representing a yaw misalignment angle of the wind turbine; and a turbulence intensity parameter. By receiving those target values (or part of them) in the wind speed profile information the character of the wind field in terms of wind speed, shear and direction impingement upon the rotor can be determined with the data driven model.

The trained data driven model may be based on a single target regression. According to that embodiment, each of the different target values which may be used to characterize the vertical wind profile of a wind field may be determined in a separate step by means of a specific data driven model. In an alternative embodiment, the trained data driven model may be based on a multiple target regression allowing for determination of multiple target values by means of a single data driven model.

The method as described in the foregoing has several advantages. The complete wind field may be represented rather than only a single point at hub height where the wind speed sensor typically is located.

Control strategies of the wind turbine can be adapted with the purpose of load reduction that might lead to adapted blade design, lighter blades, cheaper blades, and finally reduced Levelized Costs of Electricity (LCOE). An extended knowledge on wind shear may form the basis for improved turbine operation with the aim of performance increase.

Power performance analyses in the field sometimes show poor results. That might be just due to the fact that the complexity of the wind field is not covered so that actually the turbines are working correct but the point measurement of wind speed shows a poor performance, or vice versa.

Current standard IEC61490-12-1 does not reflect the complexity of the wind field and can benefit from improved modeling of the wind field as described herein.

According to a second aspect of the present invention, the invention refers to an apparatus for computer-implemented determination of a wind speed profile information of a wind field approaching a wind turbine. The apparatus comprises a processing unit configured to perform at each time point of one or more time points during the operation of the wind farm the method according to the invention.

Moreover, the invention refers to a computer program product with a program code, which is stored on a non-transitory machine-readable carrier, for carrying out the above method according to the invention or one or more preferred embodiments thereof when the program code is executed on a computer. Furthermore, the invention refers to a computer program with a program code for carrying out the method according to the invention or one or more preferred embodiments thereof when the program code is executed on a computer.

An embodiment of the present invention will now be described in detail with respect to the accompanying drawings.

Fig. 1    shows a schematic illustration of a wind turbine with a vertical wind profile of a wind field approaching the wind turbine;

Fig. 2    shows a grid point distribution of simulated wind speeds across a swept rotor area of the wind turbine used to train a data driven model;

Fig. 3    is a schematic illustration of a computing system for performing an embodiment of the invention.

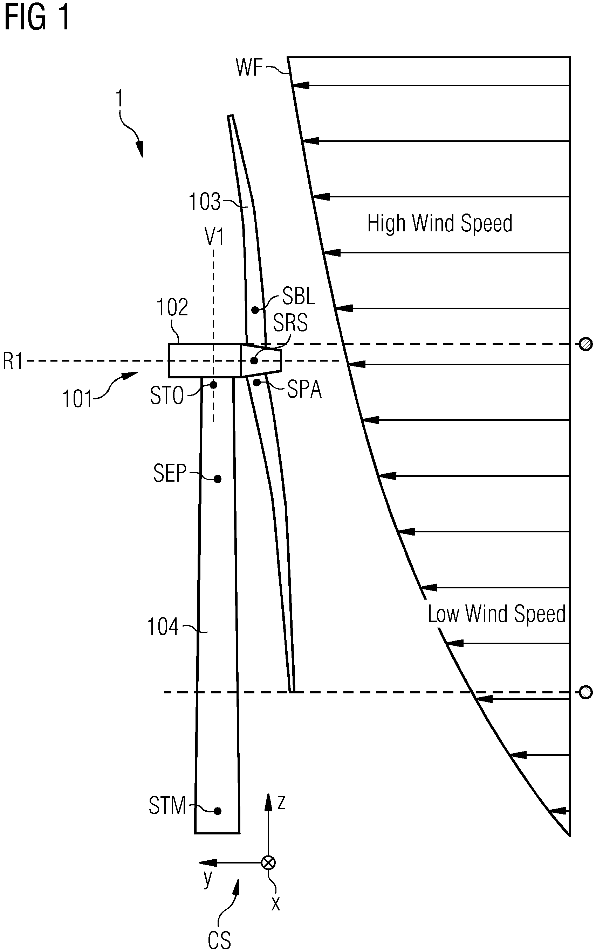

Fig. 1 shows a side view of a wind turbine 1. The wind turbine may be part of a wind farm which typically consists of a plurality of wind turbines. The method described herein is applied to a single turbine 1. Nevertheless, the method may also be applied to a plurality of wind turbines, in particular of a wind farm.

A 3D coordinate system CS for indicating the spatial arrangement of the wind turbines is shown in the lower part of Fig. 1. The vertical direction is indicated by the z-axis of the coordinate system CS, whereas the directions parallel to the horizontal direction are indicated by the x-axis and y-axis of the coordinate system CS. The wind direction is along the y-axis of the coordinate system CS.

To align a yaw angle, the wind turbine 1 comprises an upper section 101 being located on the top of a tower 104 which extends in the vertical z-direction. The upper section 101 comprises a nacelle 102 accommodating an electric generator for generating electricity. Furthermore, the upper section 101 comprises a rotor 103 having three rotor blades with an angle of 120° therebetween, where Fig. 1 only shows two of those blades. The rotor 103 is rotated around a horizontal rotor axis R1 by wind resulting in the generation of electricity by the generator within the nacelle 102. The upper section of the turbine 1 can be pivoted around the vertical yaw axis V1.

The wind turbine 1 comprises a plurality of sensors for obtaining measurement values. The measurement values are captured by the sensors to monitor and/or control the wind turbine 1. In particular, the turbine 1 may be equipped with - from top to bottom - a tower moment sensor STM, an electrical power sensor SEP, a pitch angle sensor SPA, a turbine orientation sensor STO, a rotor speed sensor SRS, and a blade load sensor SBL. It is to be noted that the wind turbine 1 may have other and additional sensors. Furthermore, some of the above-mentioned sensors may be omitted at the wind turbine 1.

Fig. 1 shows a vertical wind profile of a wind field WF approaching the wind turbine 1. As can be easily seen, due to wind shear the wind speed approaching the wind turbine 1 and its swept rotor area is increasing bottom-up. The vertical wind profile of the wind field WF can be described by a wind shear parameter which can be determined from formula (1) characterizing its curve form.

$$\alpha = \frac{\ln\left(\frac{ws_{HH}}{ws_{LBT}}\right)}{\ln\left(\frac{z_{HH}}{z_{LBT}}\right)} \qquad (1)$$

In formula (1) denote: $\alpha$ shear coefficient (wind shear parameter), $ws_{HH}$ wind speed at hub height, $ws_{LBT}$...wind speed at lower blade tip, $z_{HH}$...hub height, and $z_{LBT}$...height of lower blade tip.

Currently, the wind speed profile of the wind field WF cannot be determined as only a one point measurement of the wind speed is available. Typically wind speed is measured by means of a wind speed sensor at hub height of the nacelle 102. As the vertical wind profile of the wind field WF can affect the wind turbine's operation with regard to load and energy production, allowing for improved controlling if the vertical wind profile is known, a method for determination of the wind shear coefficient of the wind field approaching the wind turbine is described. Knowing the wind shear coefficient of the wind field WF approaching the wind turbine 1 allows for determining the vertical wind profile by means of the formula describing the curved shape.

The shear coefficient of the wind field is one of a number of target values of a wind speed profile information WSPI. As further target values at least one of a wind speed representing the wind speed at hub height of the nacelle 102 of the wind turbine, a yaw error representing a yaw misalignment angle of the wind turbine, and a turbulence intensity parameter may be considered.

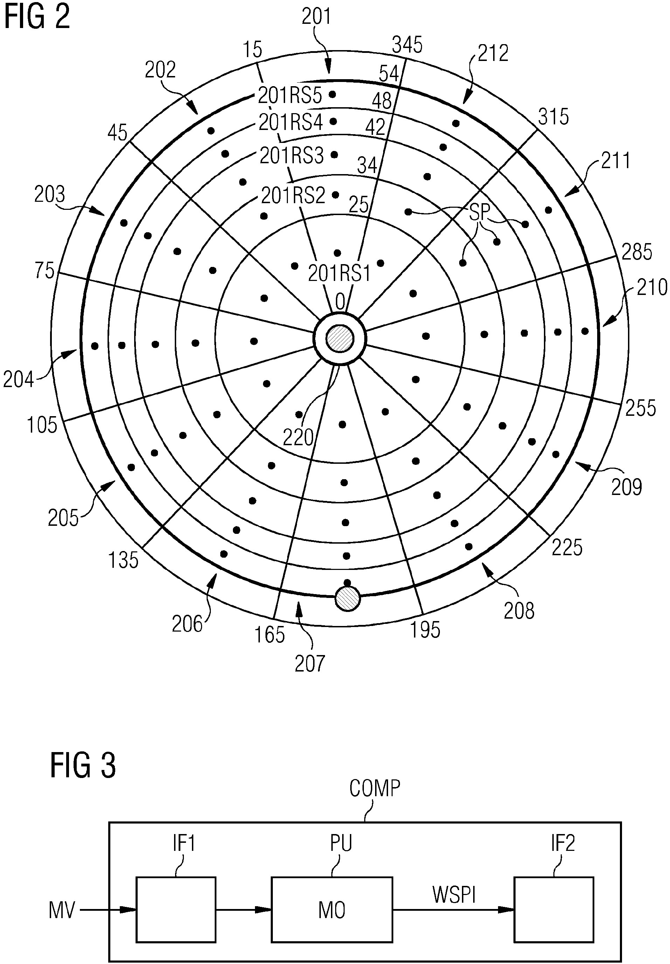

Those target value(s) can be determined by capturing measurement values of the sensors of the turbine 1 and transferring by a suitable communication link to an interface IF1 of a computing system COMP of the wind turbine or wind farm (Fig. 3). The controller or computing system COPM comprises a processing unit PU implementing a trained data driven model MO receiving the measurement values from the interface IF1 as digital input and providing the wind speed profile information WSPI (i.e. at least the shear coefficient and optional at least one of wind speed, yaw error and turbulence intensity) as a digital output at an interface IF2 for further processing, for example controlling and/or monitoring the wind turbine 1. Controlling the wind turbine 1 may comprise adapting the yaw angle, adapting a pitch angle of the rotor blades, adapting an electrical power output and so on.

In the embodiment described herein, the trained data driven model MO is a Deep Neural Network having been learned beforehand by training data. Training data may be simulation data performed by a simulation tool which simulates the target value or target values of the wind speed profile information WSPI of the wind turbine 1. As simulation tool any aeroelastic wind turbine simulation tools, such as BHawC, may be used.

The simulation data consists of a database of simulated wind turbine operational data received by the simulation tool.

The simulation data considers wind speed, shear, turbine orientation (yaw direction), and turbulence intensity as target values which are varied over a wide range in order to create a data base that closely approximates the conditions seen by the wind turbine in the field. Each of these target variables is set to a nominal value for each simulation, though turbulence creates significant variation over the simulated period. A simulation consists, for example, of 600 seconds of simulated operation with data being saved at a 25 Hz sampling rate. This results in 15000 data points for each simulation.

The target values are chosen between a minimum value and a maximum value and a given step size. For example, wind speed is considered from 5m/s up to 20m/s with a step size of 3m/s resulting in six different numbers of steps. Shear coefficient can be simulated between a minimum value of -0.2 and a maximum value of 0.5 with a step size of 0.1, resulting in eight steps. Yaw error can be considered between -20° and +20° with a step size of 10°, resulting in five steps. Turbulence intensity can be simulated between 0% and 15% with a step size of 5% resulting in four steps. In total 960 simulation runs are performed to create the neural network training database.

The simulation is further configured to output the u, v and w components of the wind field at 60 different locations over the swept rotor plane as shown in Fig. 2. The swept rotor plane is divided into 12 equal sized circle segments 201...212. Each circle segment consists of five circle segment areas. Due to simplification, in Fig. 2, the circle segment areas are only denoted for the circle segment 201 with 201RS1...201RS5. Circle segment area 201RS1 has the shape of an inner circle segment and the other circle segment areas 201RS2...201RS5 have the shape of a circular ring segment.

Each of the circle segment areas in the grid represents equal swept-area sectors by design in order to provide an equal weighting to each grid cell/data point as local aerodynamic forces are linearly-dependent upon swept area. In this sense, edges and centroids of the grid cells (indicated by SP) are distributed by the square root of the radial position as opposed to being distributed linearly. Hence, SP indicates the different locations for which wind speeds are simulated in the circle segment areas. 220 indicates the rotor hub with the physical wind speed sensor located at.

The grid of wind speed values is processed for each time step in order to have an accurate measurement of the instantaneous wind speed, shear, and direction (both horizontally and vertically). In other words, for each data set, four columns are created, representing instantaneous wind speed, shear coefficient and vertical and horizontal directions. This data is then used as target values for the output of the neural network. Each time step, i.e. every 0,04 seconds, represents a set of input measurements defined as the input layer along with a set of target values defined as output layer. The input measurements correspond to the number of measurement values of the wind turbine 1.

The number of measurement values considered in the trained data driven model MO depends upon investigation. The target value can be singular (i.e. the wind speed profile information WSPI only comprises the shear coefficient), or numerous (i.e. the wind speed profile information WSPI comprises besides the shear coefficient at least one of the wind speed, yaw error and turbulence intensity). The target value could be continuous as for a regression task (taking a values) or discrete as for a classification task. In the latter case class membership for shear coefficients are predicted, e.g. 0.1, 0.2, ..., or 0.5.

Several configurations of a trained data driven model MO being a Deep Neural Network may be used to implement the present invention. In particular, a single target regression or a multiple target regression may be used. In general, Deep Neural Networks are well known from the prior art and particularly suitable for processing the measurement values captured by the sensors of the wind turbine 1. A Deep Neural Network comprises an input layer having a number of input channels corresponding to the number of different measurement values that are used to train the network. The Deep Neural Network may have, for example, two hidden layers. It is to be understood, that the number of hidden layers of the Deep Neural Network can be less than two or more than two as well. These may be fully connected meaning that all nodes from the input layer are connected to each node of the first hidden layer. The same may hold for the first hidden layer to the nodes of the second hidden layer. The nodes may be all connected. Finally, there is an output layer which has one node (single target regression) or multiple nodes (multiple target regression or classification). The Deep Neural Network is trained by minimizing a cost function and adapting the weights of all hidden layer nodes accordingly.

For the simple target regression method, only one target value is investigated per data driven model, i.e. shear coefficient or wind speed or yaw error or turbulence intensity. The optimal hyperparameters, number of layers, nodes, epochs may vary from model to model.

For a multiple target regression a plurality of output variables from the same model is determined. With such a model, shear coefficient and at least one of wind speed, yaw error and turbulence intensity can be determined at the same time. The wind speed determined by the data driven model may be verified from the wind speed measured by the wind speed sensor at hub height.

During training of the Deep Neural Network, the importance of specific measurement value which have to be used as digital input to the Deep Neural Network can be calculated for prediction of the wind speed profile information WSPI. Simulations have shown that, for example rotor speed, electrical power, pitch angle, azimuth angle, yaw position, nacelle acceleration, blade bending moments and tower moment may be used as suitable input information for the data driven model MO.

The invention as described in the foregoing has several advantages. Particularly, an easy and straight forward method in order to determine a vertical wind profile of a wind field is provided. To do so, measurement values of the turbine are obtained and input to a suitable trained data driven model. Controlling of the turbine may be made automatically based on the wind speed profile information in order to avoid damage and/or maximize annual energy production (AEP).

**Claims**

1. A method for computer-implemented determination of a wind speed profile information (WSPI) characterizing a vertical wind profile of a wind field (WF) approaching a wind turbine (1), wherein at each time point of one or more time points during the operation of the wind farm the following steps are performed:

   - obtaining a number of measurement values (MV) of the wind turbine (1), the number of measurement values (MV) being captured by respective sensors of the wind turbine (1) to monitor and/or control the wind turbine (1);

- determining a wind speed profile information (WSPI) by processing the number of measurement values (MV) by a trained data driven model (MO), where the number of measurement values (MV) is fed as a digital input to the trained data driven model (MO) and the trained data driven model (MO) provides the wind speed profile information (WSPI) as a digital output, where the wind speed profile information (WSPI) at least comprises, as a target value, a shear coefficient of the wind field (WF) in direction to the wind turbine (1).

2. The method according to claim 1, wherein the trained data driven model (MO) is a neural network, preferably a Deep Neural Network.

3. The method according to claim 1 or 2, wherein the wind speed profile information (WSPI) is output via an interface (IF2) for determination of a control information for controlling and/or monitoring the wind turbine (1).

4. The method according to one of the preceding claims, wherein the wind speed profile information (WSPI) further comprises as target values at least one of:

   - a wind speed parameter representing wind speed in the height of a nacelle (102) of the wind turbine (1);
   - a yaw error representing a yaw misalignment angle of the wind turbine (1);
   - a turbulence intensity parameter.

5. The method according to one of claims 1 to 4, wherein the trained data driven model (MO) is based on a single target regression.

6. The method according to claim 4, wherein the trained data driven model (MO) is based on a multiple target regression.

7. An apparatus for computer-implemented determination of a wind speed profile information (WSPI) characterizing a vertical wind profile of a wind field (WF) approaching a wind turbine (1), wherein the apparatus comprises a processing unit configured to perform at each time point of one or more time points during the operation of the wind farm the following steps:

   - obtaining a number of measurement values (MV) of the wind turbine (1), the number of measurement values (MV) being captured by respective sensors of the wind turbine (1) to monitor and/or control the wind turbine (1);
   - determining a wind speed profile information (WSPI) by processing the number of measurement values (MV) by a trained data driven model (MO), where the number of measurement values (MV) is fed as a digital input to the trained data driven model (MO) and the trained data driven model (MO) provides the wind speed profile information (WSPI) as a digital output, where the wind speed profile information (WSPI) at least comprises a shear coefficient of the wind field (WF) in direction to the wind turbine (1).

8. A wind farm comprising a at least one wind turbine (1), wherein the wind farm comprises an apparatus (4) according to claim 7.

9. A computer program product with program code, which is stored on a non-transitory machine-readable carrier, for carrying out a method according to one of claims 1 to 6 when the program code is executed on a computer.

10. A computer program with program code for carrying out a method according to one of claims 1 to 6 when the program code is executed on a computer.

FIG 1

FIG 2

FIG 3

Europäisches
Patentamt

European
Patent Office

Office européen
des brevets

## EUROPEAN SEARCH REPORT

**Application Number**

EP 19 18 9607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/175709 A1 (DAHER ADEGAS FABIANO [DE] ET AL) 22 June 2017 (2017-06-22) * paragraphs [0055] - [0057], [0076] - [0079]; figure 6 * | 1-10 | INV. F03D17/00 |
| X | EP 2 213 873 A1 (SIEMENS AG [DE]) 4 August 2010 (2010-08-04) * paragraphs [0051] - [0063] * | 1-10 | |
| X | US 2017/350369 A1 (EVANS SCOTT CHARLES [US] ET AL) 7 December 2017 (2017-12-07) * paragraphs [0036] - [0045] * | 1-10 | |

**TECHNICAL FIELDS SEARCHED (IPC)**

F03D

The present search report has been drawn up for all claims

| Place of search | Date of completion of the search | Examiner |
|---|---|---|
| The Hague | 16 January 2020 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 9607

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2020

| Patent document cited in search report | | Publication date | Patent family member(s) | Publication date |
|---|---|---|---|---|
| US 2017175709 | A1 | 22-06-2017 | NONE | |
| EP 2213873 | A1 | 04-08-2010 | NONE | |
| US 2017350369 | A1 | 07-12-2017 | BR 112018074293 A2 | 12-03-2019 |
| | | | CN 109219782 A | 15-01-2019 |
| | | | EP 3465359 A1 | 10-04-2019 |
| | | | US 2017350369 A1 | 07-12-2017 |
| | | | WO 2017213882 A1 | 14-12-2017 |

EPO FORM P0459

For more details about this annex : see Official Journal of the European Patent Office, No. 12/82